# EUROPEAN PATENT SPECIFICATION

(11) **EP 2 928 244 B1**
(45) Date of publication and mention of the grant of the patent: **30.11.2016**
(21) Application number: 14290083.6
(22) Date of filing: 31.03.2014
(51) Int. Cl.: H04W 64/00, H04W 24/10

(54) **A user terminal, a base station, and a method of determining received signal power and location of a user terminal**
Benutzerendgerät, Basisstation, und Verfahren zur Bestimmung der empfangenen Signalleistung und Lokalisierung eines Teilnehmerendgerätes
Terminal utilisateur, station de base et procédé de détermination de puissance de signal reçue et emplacement d'un terminal utilisateur

(43) Date of publication of application: 07.10.2015
(73) Proprietor: ALCATEL LUCENT, 92100 Boulogne-Billancourt (FR)
(72) Inventor: Dashti, Marzieh, Dublin 15 (IE); Ho, Lester T.W., Dublin 15 (IE); Claussen, Holger, Dublin 15 (IE)
(74) Representative: Sarup, David Alexander

(56) References cited:
- EP-A1- 0 800 319
- US-A1- 2008 026 733
- US-A1- 2009 131 073
- US-A1- 2013 190 011

## Description

### Field of the Invention

The present invention relates to telecommunications, in particular to cellular wireless telecommunications.

### Description of the Related Art

A small cell base station is a low-powered transceiver node that provides cellular radio coverage in a small area, namely in a range up to 100 metres, so as to complement macrocellular networks. Small cell base stations (often referred to simply as small cells) are deployed in high numbers to provide high capacity in targeted areas. For example, a deployment can be of up to hundreds of thousands of small cells.

One challenge that operators of cellular telecommunications networks have is identifying good locations for small cell deployments. Small cells should be deployed to cover geographical areas that have telecommunications traffic demand. These areas are often known as "hotspots". Also, received signal strength (RSS) from the underlying macrocellular network needs to be considered as this impacts both the coverage area of the small cell and the level of interference between macrocell and small cell. For example, a small cell that is not deployed in a good position will not help in hotspot traffic offload from the macrocell to the small cell, and may also cause radio interference to user terminals in the hotspot that are connected to the macrocell.

It follows that for planning small cell deployments, maps are required of traffic hotspots and received signal strength from the macrocellular network. Many known approaches to formulating such maps are laborious involving field engineers making many test measurements ("drive testing").

To obtain these maps without drive-testing, measurements are made by user terminals of known geographical location and sent to base stations where the measurements are collected by base stations. The measurements are known as Radio Frequency (RF) fingerprints. Each RF fingerprint is a measurement of received signal strength at the then location of the user terminal. Specifically, each measurement is denoted a Received Signal Strength Indicator (RSSI), and is a measurement of the power present in a received radio signal as a function of x and y coordinates.

From many of these measurements, a map is formulated of RSSI as a function of location. This map is known as a RF fingerprint map.

Once formulated, the RF fingerprint map is then used to estimate the location of a user terminal by comparing the RSSI detected by the user terminal (and reported to the base station) to the RF fingerprint map. The user terminal is determined as being at that location on the map that has the same RSSI value as the user terminal has just measured.

How useful and accurate an RF fingerprint map is depends both on the RSSI measurements and associated locations being accurate, and that there is a high number of RSSI and location data points obtained within a geographical area (in other words a high data intensity).

### Geo-locating User Terminals

In 3GPP (3^{rd} Generation Partnership Project) Long Term Evolution (LTE) networks, there are several known ways in which the locations of user terminals that send RSSI data are obtained. Three are Global Navigational Satellite System (GNSS), positioning based on Cell Identifier (CID), and Observed Time Difference of Arrival (OTDOA). These are described in turn as follows.

### Global Navigational Satellite System (GNSS) positioning

Global Navigational Satellite System (GNSS) positioning is satellite-based positioning such as Global Positioning System (GPS). It provides accurate location data. However, user terminals do not report GNSS location data to the network as this is not required by 3GPP Standards (specifically LTE Standard Release 8) for cellular telecommunications networks that are currently deployed. Although GNSS location data reporting by user terminals is being introduced into LTE Release 10 and Release 11 Standards as a Minimisation of Drive Tests (MDT) feature, GNSS location data reporting is unlikely to be widely implemented for many years. For GNSS location data reporting to be invoked in a user terminal, consent by the user is required, and given privacy concerns of some users, consents may not be widely available to the operator (at least in the absence of some form of user compensation, e.g. reduced tariffs). Furthermore, using GNSS to update the network as to user terminal location uses considerable energy, which shortens battery life of the user terminal. In consequence, prolonged use of GNSS positioning is not desirable. Furthermore, GNSS signals are not available indoors and are unreliable in dense urban environments.

### Positioning based on Cell Identifier (CID)

Positioning based on Cell Identifier (CID) relies on identification of the cell currently serving a user and geographical knowledge associated with that cell. Typically, basic CID positioning provides only a coarse estimate of the user terminal location, having an accuracy of roughly the same order as the cell radius. In enhanced CID approaches, a location server requests additional measurement reports, for example of Angle of Arrival (AoA) measurements and Reference Signal Received Power (RSRP) measurements.

AoA measurements are only reliable if suitable antenna arrays are deployed.

RSRP measurements are made by a user terminal both of the serving cell base station and neighbouring base stations. The distance from a base station to the user terminal is calculated by pathloss estimation, in other words by determining distance from the degree of signal attenuation. Using the distances determined from the user terminal to at least three base stations, the user terminal's location is calculated by triangulation. The accuracy of this technique is often low both due to the difficulty of accurately estimating path loss in the presence of obstacles in the environment such as buildings, and due to variations in antenna gain patterns and antenna configurations. In general, the accuracy of this approach is low, with an accuracy level of 400 to 1000 metres.

### Observed Time Difference of Arrival (OTDOA)

Because of the limitations of the above mentioned methods, Long Term Evolution (LTE) cellular networks are known to rely on timing measurements to achieve more accurate positioning; for example of the order of 50 to 300 metres. This is known as Observed Time Difference of Arrival (OTDOA) positioning and was introduced in Release 9 of the LTE standard.

Observed Time Difference of Arrival (OTDOA) positioning is based on a user terminal measuring the time difference observed between the Reference Signal (RS) of a neighbour cell and those of the serving cell. This is known as a measurement of Reference Signal Time Difference (RSTD).

The network uses these measurements together with information as to the location of the transmit antennas and transmission timings from the base stations to calculate user terminal location.

OTDOA can be considered a triangulation or multilateration method in which the user terminal measures the time difference between some specific reference signals from several base stations and reports these time differences to the network. The network uses these time differences and knowledge of base station locations to calculate the user terminal's position.

It is a requirement of the OTDOA technique to obtain timing delay measurements from at least three cellular base stations. In order to increase the probability that a user terminal can detect sufficient neighbour cells and therefore achieve reliable OTDOA positioning, reference signals for positioning are sent in specific positioning subframes within a larger data frame. This is in accordance with LTE Release 9. The positioning subframes are provided to aid the detection by the user terminal of the neighbour cell base stations by reducing interference and increasing the Reference Signal energy. The positioning subframes provide Positioning Reference Signals (PRS) in addition to the cell specific reference signals defined in LTE Release 8.

Despite the introduction of these positioning subframes into LTE Release 9, OTDOA positioning still has a number of practical issues. Specifically, many current LTE cellular networks do not have OTDOA positioning available. OTDOA positioning will likely not be widely available in networks and user terminals for several years. Furthermore, the implementation of Positioning Reference Signals (PRS) is optional in LTE compliant networks. Furthermore, frequent PRS transmissions are required to obtain higher accuracy (which takes up valuable radio resources).

As mentioned above, although this is an efficient method for calculating the user terminal's geographical location, this time-based positioning requires time delay measurements from at least three base stations. This is not available in LTE networks deployed to date (Release 8 or earlier) where user terminals only connect to one base station at a time. This is as there is no soft-handover functionality (unlike in UMTS and CDMA2000 networks). As a result, timing information is only available for a single serving base station at any one time, hence time-based positioning cannot be used.

It is known from United States Patent Publication US2008/026733 to provide a method of determining received signal power and location of a user terminal in a network comprising base stations for cellular wireless telecommunications, the user terminal and the base station serving the user terminal both being switchable between operation according to a first network technology domain and operation according to a second network technology domain, the method comprising:
the user terminal undertaking a measurement of received power in the first domain,
the user terminal being handed over to the second domain of the serving base station,
the user terminal taking measurements of signal transmission times between the user terminal and at least three of the base stations in the second domain,
the user terminal being handed back to the first domain of the serving base station,
   location of the user terminal being determined from the measurements of signal transmission times.

### Summary

The present invention is characterised over the disclosure of US2008/026733 in that the measured received power being stored associated with the determined location
in which the measured received power and the associated determined location are stored in a database as a data entry for a radio frequency power map, and
in which upon a user terminal being identified as in a location or area where there are insufficient data entries of measured received power and the associated determined location, the method is triggered.

The reader is referred to the appended independent claims. Some preferred features are laid out in the dependent claims.

An example of the present invention is a method of determining received signal power and location of a user terminal in a network comprising base stations for cellular wireless telecommunications, the user terminal and the base station serving the user terminal both being switchable between operation according to a first network technology domain and operation according to a second network technology domain, the method comprising:
the user terminal undertaking a measurement of received power in the first domain,
the user terminal being handed over to the second domain of the serving base station,
the user terminal taking measurements of signal transmission times between the user terminal and at least three of the base stations in the second domain,
the user terminal being handed back to the first domain of the serving base station,
location of the user terminal being determined from the measurements of signal transmission times, and
the measured received power being stored associated with the determined location.

Preferred embodiments provide a method for obtaining timing information for user localisation which enables creation of geo-located Radio Frequency fingerprint maps for example for Long Term Evolution (LTE) cellular networks. A fingerprint map may be useful for determining user terminal location from a measurement of received power by a user terminal. A fingerprint map may be useful for network planning purposes.

Preferred embodiments provide a method to use 3G networks to obtain timing-based geo-location for 4G network elements.

Some preferred embodiments have advantages over the known OTDOA approach used in known 3GPP LTE Release 9 networks in being available for use in current networks for example Release 8, and UMTS-based positioning is more accurate. For example UMTS-based positioning has a resolution of 5 metres as compared to LTE OTDOA positioning which has a resolution of 9.76 metres.

Preferred embodiments enable geo-locations of user terminals to be obtained for use in LTE RF fingerprinting, namely generation of Radio Frequency received power maps at frequency bands used in LTE, for example a map of RSSI as a function of x and y coordinates. The maps enable large scale deployments of small cell base stations. Also, the maps enable determination of a user terminal terminal's location to be made accurately and efficiently from received power measurements. Knowing user terminal location is useful for many location-based services including emergency applications.
Preferably after being handed back to the first domain of the serving base station, the user terminal makes a further measurement of received power in the first domain, the measured received power is compared to said further measurement of received power, and the measurement of received power is stored associated with the determined location upon the determination that the measurement of received power differs from said further measurement of received power by less than a predetermined threshold.

Preferably, the measured received power and the associated determined location are stored in a database as a data entry for a radio frequency power map. Preferably, further data entries are added over time. Preferably upon a user terminal being identified as in a location or area where there are insufficient data entries of measured received power and the associated determined location, the method is triggered. Preferably each data entry is discarded as expired after a predetermined lifespan.

Preferably said determining location is by triangulation involving measurements of signal transmission times between the user terminal and three or more base stations.

Preferably the first domain is Long Term Evolution, LTE, and the second domain is Wideband-Code Division Multiple Access, W-CDMA. Alternatively preferably the first domain is W-CDMA and the second domain is Global System for Mobiles, GSM. Alternatively preferably the first domain is one of LTE, W-CDMA, GSM, or WiFi and the second domain is another LTE, W-CDMA, GSM, or WiFi.

Preferably there is an additional handover to, and location determination in, a third network technology domain, to refine the location determination made in the second domain.

### Brief Description of the Drawings

An embodiment of the present invention will now be described by way of example and with reference to the drawings, in which:
Figure 1 is a diagram illustrating a network according to a first embodiment in which RF fingerprint data in the LTE domain is obtained and stored,
Figure 2 is a diagram illustrating the network shown in Figure 1 in which RF Fingerprint data in the Wideband-Code Division Multiple Access (W-CDMA) domain is obtained and from that user terminal location is selectively determined for storage with the LTE RF fingerprint data,
Figure 3 is a message sequence diagram illustrating operation of the network shown in Figures 1 and 2, and
Figure 4 is a message sequence diagram further illustrating operation of the network shown in Figures 1 and 2.

### Detailed Description

The inventors realised that, on the one hand, in known Code Division Multiple Access (CDMA)-based systems, such as a CDMA2000 network or a Wideband-CDMA (W-CDMA) network such as a Universal Mobile Telecommunications System (UMTS) network, soft handover allows a user terminal to communicate with multiple base stations simultaneously, enabling the user terminal to obtain time delay measurements to multiple base stations allowing round trip times to be used for triangulation to determine user terminal geo-location.

The inventors also realised that, on the other hand, in Orthogonal Frequency Domain Multiplex (OFDM) based Long Term Evolution (LTE) networks, soft handovers are not possible and consequently the user terminal is only able to perform a time delay measurement to the base station that currently serves the user terminal. That single measurement only allows the serving cell to make an estimate of range to the user terminal rather than provide an accurate user terminal location.

Furthermore, the inventors realised that the achievable known time-based positioning in known LTE networks is still less accurate than that of earlier known Universal Mobile Telecommunications System (UMTS) networks. For example, if Positioning Reference Signals (PRS) are transmitted, the Reference Signal Time Difference (RSTD) measurement can be obtained with a best resolution of 3.5 Tₛ where Tₛ =1/(15000*2048) seconds (as mentioned in Third Generation Partnership Project (3GPP) Technical Specification 36.355 version 9.4.0 Release 9. This corresponds to 9.76 metres. In comparison, in UMTS, round trip time (RTT) measurements are reported with a 1/16 chip resolution which corresponds to 5 metres, see the paper by Borkowski, Jakub, Jarno Niemelä, and Jukka Lempiäinen "Location techniques for UMTS radio networks." In Proc. Of Mobile Venue Conf. 2004.

The inventors realised that, in a network made up of both a Third Generation, 3G, domain (such as CDMA2000 or W-CDMA network) and an LTE domain, and in which a base station provides both 3G and LTE coverage, time delay measurements made in the 3G domain can be used to provide geolocation information for Received Signal Strength measurements made using an LTE network, in order to provide location information for LTE Radio fingerprint maps. Specifically, when a user terminal is connected to the LTE network, the user terminal reports Received Signal Strength Indicators (RSSI), specifically Reference Signal Received Power (RSRP) measurements. These RF 'fingerprints' are used to build up a Radio Frequency fingerprint map by, for each measurement, working out the geographical location at which the measurement was made.

Once formulated, an RF fingerprint map is useful for identifying user terminal location based on a received power measurement by the user terminal. This is useful for location based services. The map is also useful for network planning purposes.

### Network

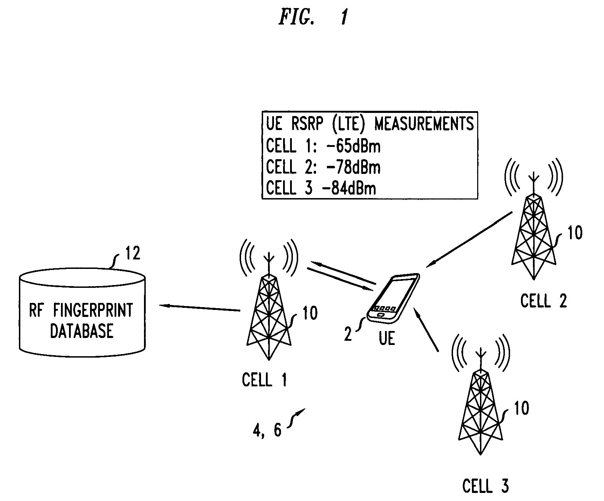

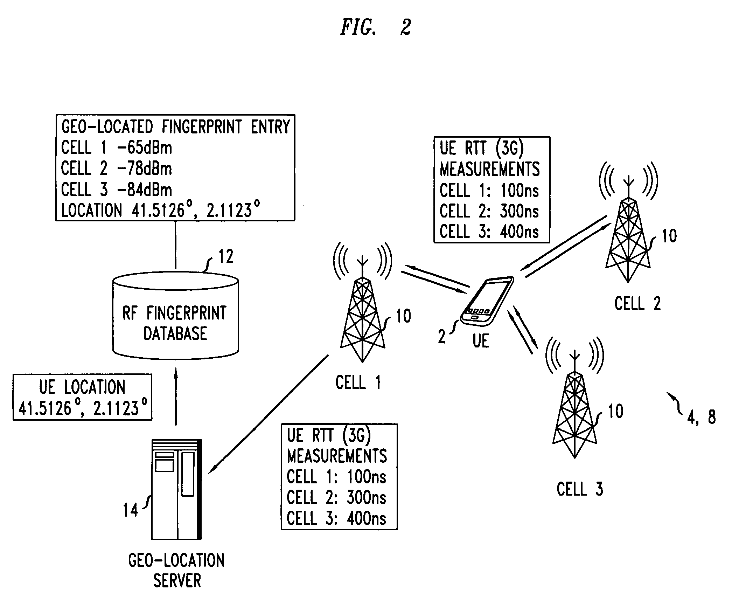

As shown in Figure 1 and Figure 2, a user terminal 2 is connected to a network 4 including an LTE network domain 6 and a W-CDMA network domain 8. The network 4 includes base stations 10 which provide both 3G (W-CDMA) and 4G (LTE) coverage. Three of the base stations 10 which are shown in Figure 1, denoted Cell 1, Cell 2 and Cell 3 respectively. The network 2 includes an RF fingerprint database 12 connected to the base stations 10 in the LTE network domain 6; and connected to the base stations 10 in the W-CDMA domain via a Geo-location server 14.

The user terminal 2 is either connected to the LTE network domain 6 as shown in Figure 1 or connected to the 3G network domain 8 as shown in Figure 2.

### Geographical location operation

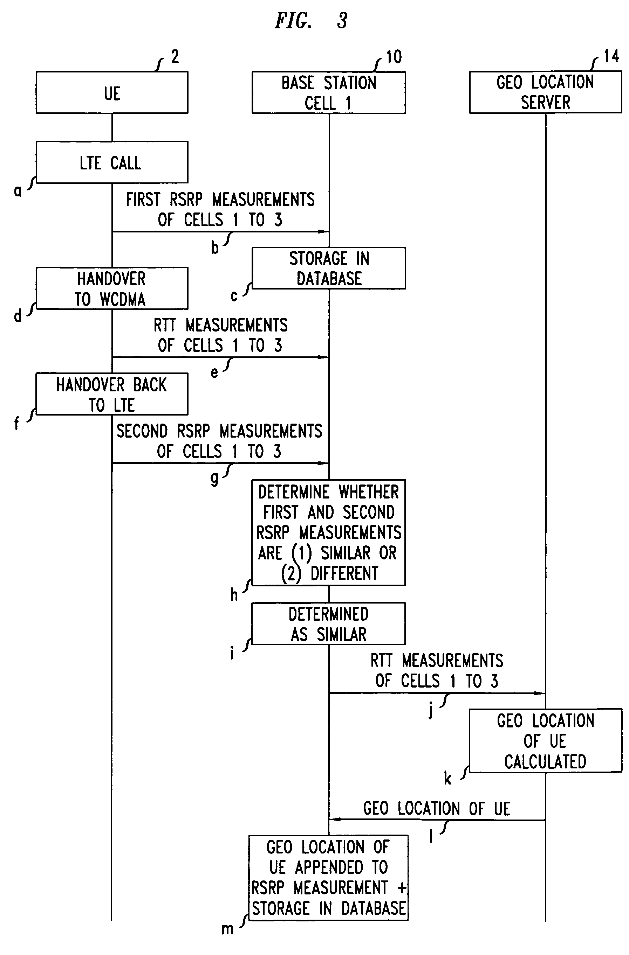

As shown in Figure 3, when the user terminal 2 makes (step a) a call over the LTE network domain 6, the user terminal 2 sends back (step b) to the serving base station (Cell 1) RSRP measurements of the serving base station (Cell 1) and neighbouring base stations (Cell 2 and Cell 3 in this example). These RSRP measurements are stored (step c) in the database 12.

Being connected to the LTE network domain 6, the user terminal 2 is then instructed by its serving base station (Cell 1) to perform a handover to the 3G network domain 8. This handover is done (step d). This handover is a vertical handover in that the type of connectivity is changed. A vertical handover involves changing the data link layer technology used to access the network.

Once this handover is complete, the 3G network domain performs (step e) round trip time (RTT) positioning for use in determining geographical location of the user terminal 2. This involves measurement of round trip delays to each of the base stations (Cell 1, Cell 2, Cell 3) by the user terminal.

As soon as the RTT measurements are completed, the user terminal 2 is handed back (step f) to the LTE network domain 6.

To ensure that the geographical location data determined from the received RTT measurements would be accurate, Reference Signal Received Power (RSRP) measurements are made (step g) again by the user terminal 2 of the base stations in the LTE network domain 6 and compared (step h) in the serving base station to the first ones that were stored in the database 12. If sufficiently similar (step i) (in other words, the RF fingerprints match), it is considered that the user terminal 2 has not moved significantly and the RTT measurements are taken as accurate. Accordingly the RTT measurements are forwarded (step j) to the geo-location server 14 where geographical location data is determined (step k) by triangulation and sent (step *l*) to the database 12, then recorded (step m) in the database 12, specifically by being appended to the RSRP measurements.

As an example, RSRP measurements taken by the user terminal in the LTE network domain 6 and stored in the database are Cell 1: -65 dBm, Cell 2: -78dBm, Cell 3: -84dBm. The RTT measurements then made by the user terminal in the 3G network domain are Cell 1: 100ns, Cell 2: 300ns, Cell 4: 400ns. As the user terminal is stationary the second RSRP measurements are the same as the first. The user terminal location coordinates are determined from the RTT measurements as 41.5126°, 2.1120°. These coordinates are stored in the database appended to the RSRP measurements as a completed geo-located RF fingerprint entry.

### Geographical location operation done selectively

In practise, this operation is only performed for selected user terminals so as to keep the impact to services low and keep low the extra traffic burden on the network. The user terminals are selected by the network identifying user terminals in locations where none or few RF fingerprints have yet been obtained by comparing reported RSRP measurements from user terminals to the RF fingerprint database. If a sufficiently different RSRP measurement is reported by the user terminal to those already recorded then the process of geographical location operation shown in Figure 3 is undertaken. In this way, the LTE RF fingerprint map is made automatically and efficiently. This map is for subsequent use in identifying user location from RSRP reported by the user terminal.

The geographical location operations are only done when handovers between 3G and LTE network technology domains would not disrupt the call being made with the user terminal. In practice, before the geographical location operation is performed, the network checks the Quality of Service (QoS) requirements of the user terminal to ensure that the geographical location operation should not be detrimental to the service to the user. For example, a user terminal handling a call that has a high data rate and is delay sensitive, for example, Skype video conferencing, is excluded as a candidate for obtaining an LTE RF fingerprint entry.

Over time, the LTE RF fingerprint map is built up as fingerprint entries are collected. The network ceases performing geographical location operations for areas which already have a lot of geo-located RSRP entries, in other words LTE RF fingerprint entries. The geographical location operation with its associated handovers is then only invoked for areas having insufficient LTE RF fingerprints, in other words few or no geo-located RSRP entries.

### User terminal moving too fast

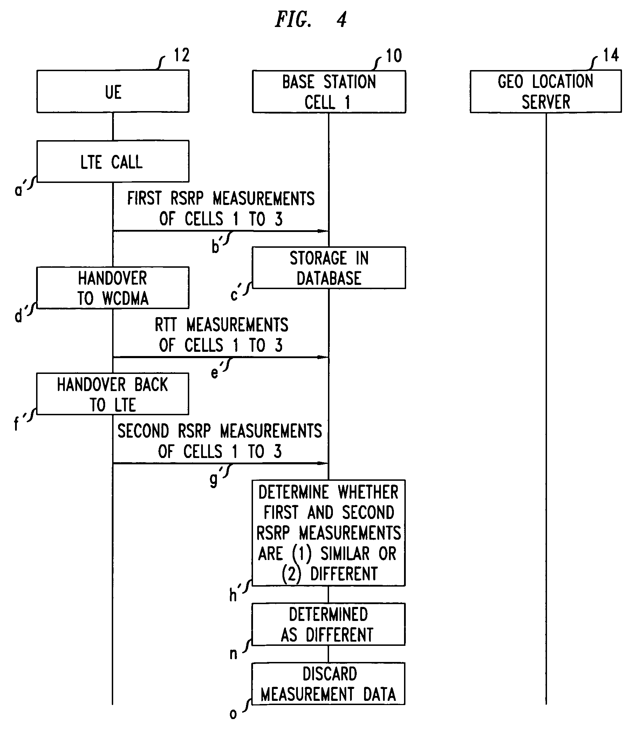

As shown in Figure 4, it can happen that the geographical location operation is initiated but at a point in the operation it is determined that the user terminal is moving too fast to allow a valid geographical location to be determined.

Specifically, in Figure 4, the operation from a' to step h' is the same as steps a to step h shown in Figure 3.

Specifically, when the user terminal 2 makes (step a') a call over the LTE network domain 6, the user terminal 2 sends back (step b') RSRP measurements of the serving base station (Cell 1) and neighbouring stations (Cell 2 and Cell 3 in this example). These RSRP measurements are stored (step c') by the serving base station (Cell 1) in the database 12. Being connected to the LTE network domain 6, the user terminal 2 is then instructed by its serving base station (Cell 1) to perform a handover to the 3G network domain 8. This handover is done (step d'). This handover is a vertical handover in that type of connectivity is changed. A vertical handover involves changing the data link layer technology used to access the network. Once this handover is complete, the 3G network domain performs (step e') round trip time (RTT) positioning to determine geographical location of the user terminal 2. This involves measurement of round trip delays to each of the base stations (Cell 1, Cell 2, Cell 3) by the user terminal. As soon as the RTT measurements are completed, the user terminal 2 is handed back (step f) to the LTE network domain 6. To ensure that the geographical location data received is accurate, Reference Signal Received Power (RSRP) measurements are made (step g') again by the user terminal 2 of the base stations in the LTE network domain 6 and compared (step h') to the first ones in the database 12.

From this point the operation shown in Figure 4 differs to that shown in Figure 3. It is determined (step n) that the two sets of RSRP measurements are too different. This means that the user terminal is relatively fast moving. The RTT measurements are not used to calculate a geo-location to be associated with the earlier made RSRP measurements. The two sets of RSRP measurements and the RTT measurements are simply discarded (step o).

### Other Network Technology Combinations

The example described above with reference to Figures 1 to 4 describes using triangulation in the 3G network domain as geographical location information for Radio frequency data points in the LTE network domain. However in some other embodiments other network domain combinations, in other words air interface technology combinations, can be used.

For example, where the user terminal is a dual mode 2G/3G user terminal (for example a GSM/UMTS user terminal), geographical location information of a user terminal in the 2G network domain can be associated with radio frequency data in the 3G network domain.

Another example network uses LTE and GSM. The user terminal is a LTE/GSM user terminal, geographical location information of a user terminal in the GSM network domain can be associated with radio frequency data in the LTE network domain.

### Additional/Alternative Network Technologies

The example described above with reference to Figures 1 to 4 describes using triangulation in the 3G network domain as geographical location information for Radio frequency data points in the LTE network domain. However in other embodiments, one, two or more additional network domains can be made use of also to provide a more accurate estimate of geographical location of the multi-mode user terminal. For example in one example, handover to the 3G network domain for RTT measurements is followed by handover to the GSM network domain to provide supplementary geographical location data for improved accuracy.

Various combinations of three or more network domains are possible where handover to the other network domains enables accurate geographical location of RF measurements made in a first network domain.

In one example, the first network domain is LTE and the additional network domains can be any two or more amongst GSM, UMTS, WiFi, etc.

### Some other Variants

In some embodiments, the RF landscape may change over time so the fingerprint map is automatically updated. This is done by each RF fingerprint (in other words, each data set of RSRP measurements and associated geographical location) having an expiry date which is stored. Upon expiry that data set is removed from the RF fingerprint map. If that area of the map then has too few LTE RF fingerprints, at least one further geographical location operation is invoked when user terminals are in that area so as to update the LTE RF fingerprint map.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. Some embodiments involve computers programmed to perform said steps of the above-described methods.

## Claims

1. A method of determining received signal power and location of a user terminal in a network comprising base stations for cellular wireless telecommunications, the user terminal and the base station serving the user terminal both being switchable between operation according to a first network technology domain and operation according to a second network technology domain, the method comprising:
the user terminal undertaking a measurement of received power in the first domain,
the user terminal being handed over to the second domain of the serving base station,
the user terminal taking measurements of signal transmission times between the user terminal and at least three of the base stations in the second domain,
the user terminal being handed back to the first domain of the serving base station,
location of the user terminal being determined from the measurements of signal transmission times, and
**characterised in that**
the measured received power being stored associated with the determined location
in which the measured received power and the associated determined location are stored in a database as a data entry for a radio frequency power map, and
in which upon a user terminal being identified as in a location or area where there are insufficient data entries of measured received power and the associated determined location, the method is triggered.

2. A method according to claim 1, in which after being handed back to the first domain of the serving base station, the user terminal makes a further measurement of received power in the first domain,
the measured received power is compared to said further measurement of received power,
and the measurement of received power is stored associated with the determined location upon the determination that the measurement of received power differs from said further measurement of received power by less than a predetermined threshold.

3. A method according to claim 1 or claim 2, in which further data entries are added over time.

4. A method according to any preceding claim, in which each data entry is discarded as expired after a predetermined lifespan.

5. A method according to any preceding claim, in which said determining location is by triangulation involving measurements of signal transmission times between the user terminal and three or more base stations.

6. A method according to any preceding claim, in which the first domain is Long Term Evolution, LTE, and the second domain is Wideband-Code Division Multiple Access, W-CDMA.

7. A method according to any of claims 1 to 5, in which the first domain is W-CDMA and the second domain is Global System for Mobiles, GSM.

8. A method according to any of claims 1 to 5 in which the first domain is one of LTE, W-CDMA, GSM, or WiFi and the second domain is another LTE, W-CDMA, GSM, or WiFi.

9. A method according to any preceding claim, in which there is an additional handover to, and location determination in, a third network technology domain, to refine the location determination made in the second domain.

10. A network comprising base stations for cellular wireless telecommunications, a user terminal in the network and the base station serving the user terminal both being switchable between operation according to a first network technology domain and operation according to a second network technology domain,
the user terminal comprising means to undertake a measurement of received power in the first domain,
the network comprising means to determine received signal power and location of the user terminal comprising:
means to receive a measurement of received power measured by a user terminal connected to a serving base station in a first network technology domain,
means to instruct the user terminal to handover to connection with the base station in a second network technology domain and to receive measurements in the second technology domain of signal transmission times between the user terminal and at least three base stations, to be used in determining location of the user terminal, and
means to determine location of the user terminal from the measurements of signal transmission times, and
means to instruct the user terminal to be handed back to the first domain of the serving base station, and
**characterised in that** the network further comprises:
means to store the measured received power and the associated determined location in a database as a data entry for a radio frequency power map, and
means to trigger determination of the received signal power and the location of the user terminal upon the user terminal being identified as in a location or area where there are insufficient data entries of measured received power and the associated determined location.

11. A network according to claim 10, configured to make a further measurement of received power in the first domain after being handed back,
the network being configured to compare the measurement of received power to said further measurement of received power,
and upon the determination that the measurement of received power differs from said further measurement of received power by less than a predetermined threshold, the network is configured to store the measurement of received power associated with the determined location.

12. A network according to claim 10 or claim 11, in which the serving base station is configured to store the measured received power and associated determined location in a database.

## Patentansprüche

1. Verfahren für das Bestimmen einer empfangenen Signalleistung und die Lokalisierung eines Teilnehmerendgeräts in einem Netzwerk, welches Basisstationen für drahtlose zellulare Telekommunikation, das Benutzerendgerät und die das Benutzerendgerät bedienende Basisstation umfasst, wobei beide umschaltbar sind zwischen einem Betrieb gemäß einer ersten Netzwerktechnologiedomäne und dem Betrieb gemäß einer zweiten Netzwerktechnologiedomäne, wobei das Verfahren umfasst:
das Vornehmen einer Messung der empfangenen Leistung in der ersten Domäne durch das Benutzerendgerät,
die Übergabe des Benutzerendgeräts an die zweite Domäne der bedienenden Basisstation,
das Vornehmen von Messungen von Abstimmungssignalen der Übertragung zwischen dem Benutzerendgerät und mindestens drei der Basisstationen in der zweiten Domäne,
die Zurückgabe des Benutzerendgeräts an die erste Domäne der bedienenden Basisstation,
das Bestimmen der Lokalisierung des Benutzerendgeräts aus den Messungen von Signalübertragungszeiten, und
**dadurch gekennzeichnet ist, dass**
die gemessene empfangene Signalleistung assoziiert mit der bestimmten Lokalisierung gespeichert wird,
wobei die gemessene empfangene Leistung und die assoziierte bestimmte Lokalisierung als Eintrag für eine Funkfrequenzleistungskarte in einer Datenbank gespeichert werden, und
wobei das Verfahren dann ausgelöst wird, wenn ein Benutzerendgerät als in einer Position oder einem Bereich befindlich identifiziert wird, für den nicht ausreichend viele Dateneinträge gemessener empfangener Signalleistung und der assoziierten bestimmten Lokalisierung vorliegen.

2. Verfahren nach Anspruch 1, wobei das Benutzerendgerät nach seiner Zurückgabe an die erste Domäne der bedienenden Basisstation in der ersten Domäne weitere Messungen der empfangenen Leistung vornimmt,
wobei die gemessene empfangene Leistung mit besagten weiteren Messungen der empfangenen Leistung verglichen wird,
und wobei die Messung der empfangenen Leistung assoziiert mit der bestimmten Lokalisierung gespeichert wird, wenn bestimmt wurde, dass die Messung der empfangenen Leistung um weniger als einen vorgegebenen Grenzwert von besagter weiterer Messung der empfangenen Leistung abweicht.

3. Verfahren nach Anspruch 1 oder 2, wobei im Laufe der Zeit weitere Dateneinträge hinzugefügt werden.

4. Verfahren nach einem jeglichen der vorgenannten Ansprüche, wobei jeder Dateneintrag nach einer vorgegebenen Lebensdauer als abgelaufen entfernt wird.

5. Verfahren nach einem jeglichen der vorgenannten Ansprüche, wobei besagtes Bestimmen der Lokalisierung durch Triangulation unter Einbezug von Messungen von Signalübertragungszeiten zwischen dem Benutzerendgerät und drei oder mehr Basisstationen erfolgt.

6. Verfahren nach einem jeglichen der vorgenannten Ansprüche, wobei die erste Domäne eine Domäne des Typs Long Term Evolution (LTE) und die zweite Domäne eine Domäne des Typs Wideband-Code Division Multiple Access (W-CDMA) ist.

7. Verfahren nach einem jeglichen der Ansprüche 1 bis 5, wobei die erst Domäne vom Typ W-CDMA und die zweite Domäne vom Typ Global System for Mobiles (GMS) ist.

8. Verfahren nach einem jeglichen der Ansprüche 1 bis 5, wobei die erste Domäne vom Typ LTE, W-CDMA, GSM oder WiFi und die zweite Domäne eine weitere Domäne des Typs LTE, W-CDMA, GSM oder WiFi ist.

9. Verfahren nach einem jeglichen der vorgenannten Ansprüche, wobei eine zusätzliche Übergabe an und Lokalisierungsbestimmung in einer dritten Netzwerktechnologiedomäne erfolgt, um die in der zweiten Domäne erfolgte Lokalisierungsbestimmung zu verfeinern.

10. Ein Netzwerk, Basisstationen für drahtlose zellulare Telekommunikation, ein Benutzerendgerät in dem Netzwerk und die das Benutzerendgerät bedienende Basisstation umfassend, wobei beide umschaltbar sind zwischen einem Betrieb gemäß einer ersten Netzwerktechnologiedomäne und dem Betrieb gemäß einer zweiten Netzwerktechnologiedomäne,
wobei das Benutzergerät Mittel für das Vornehmen einer Messung der empfangenen Leistung in der ersten Domäne umfasst,
wobei das Netzwerk Mittel für das Bestimmen der empfangenen Signalleistung und Lokalisierung des Benutzerendgeräts umfasst, wobei die Mittel umfassen:
Mittel für den Empfang einer Messung der empfangenen Leistung, gemessen von einem Benutzerendgerät, das mit einer bedienenden Basisstation in einer ersten Netzwerktechnologiedomäne verbunden ist,
Mittel für das Anweisen des Benutzerendgerät zur Übergabe an eine Verbindung mit der Basisstation in einer zweiten Netzwerktechnologiedomäne und zum Empfangen von Messungen von Signalübertragungszeiten zwischen dem Benutzerendgerät und mindestens drei Basisstationen in der zweiten Technologiedomäne zu deren Verwendung zur Bestimmung der Lokalisierung des Benutzerendgeräts, und
Mittel für das Bestimmen der Lokalisierung des Benutzerendgeräts aus den Messungen von Signalübertragungszeiten, und
Mittel, um die Zurückgabe des Benutzerendgeräts an die erste Domäne der bedienenden Basisstation anzuweisen, und
wobei das Netzwerk dadurch gekenntzeichnet ist, dass es weiterhin umfasst:
Mittel für das Speichern der gemessenen empfangenen Leistung und der assoziierten bestimmten Lokalisierung als Eintrag für eine Funkfrequenzleistungskarte in einer Datenbank, und
Mittel für das Auslösen der Bestimmung der empfangenen Signalleistung und der Lokalisierung eines Benutzerendgeräts auf das Identifizieren des Benutzerendgeräts als an einer Position oder in einem Bereich befindlich, für den unzureichende Dateneinträge zur Messung der empfangenen Leistung und der assoziierten bestimmten Lokalisierung vorliegen.

11. Netzwerk nach Anspruch 10, konfiguriert für das Vornehmen einer weiteren Messung der empfangenen Leistung in der ersten Domäne nach der Zurückgabe des Benutzerendgeräts,
wobei das Netzwerk konfiguriert ist für das Vergleichen der Messung der empfangenen Leistung mit besagter weiterer Messung der empfangenen Leistung,
und wobei das Netzwerk weiterhin dafür konfiguriert ist, um auf das Bestimmen hin, dass die Messung der empfangenen Leistung um weniger als einen vorgegebenen Grenzwert von besagter weiterer Messung der empfangenen Leistung abweicht, die Messung der empfangenen Leistung assoziiert mit der bestimmten Lokalisierung zu speichern.

12. Netzwerk nach Anspruch 10 oder 11, wobei die bedienende Basisstation konfiguriert ist für das Speichern der gemessenen empfangenen Leistung und der assoziierten bestimmten Lokalisierung in einer Datenbank.

## Revendications

1. Procédé de détermination de la puissance et de la localisation du signal reçu d'un terminal utilisateur dans un réseau comprenant des stations de base pour des télécommunications sans fil cellulaires, le terminal utilisateur et la station de base desservant le terminal utilisateur pouvant tous deux être commutés entre un fonctionnement selon un premier domaine de technologie de réseau et un fonctionnement selon un deuxième domaine de technologie de réseau, le procédé comprenant les étapes suivantes :
le terminal utilisateur effectue une mesure de la puissance reçue dans le premier domaine,
le terminal utilisateur est transféré dans le deuxième domaine de la station de base de desserte,
le terminal utilisateur réalise des mesures des temps de transmission du signal entre le terminal utilisateur et au moins trois des stations de base dans le deuxième domaine,
le terminal utilisateur est transféré à nouveau dans le premier domaine de la station de base de desserte,
la localisation du terminal utilisateur est déterminée à partir des mesures des temps de transmission du signal, et
**caractérisé en ce que**
la puissance reçue mesurée est stockée en association avec la localisation déterminée
dans lequel la puissance reçue mesurée et la localisation déterminée associée sont stockées dans une base de données sous forme d'une entrée de données pour une carte de puissance radiofréquence, et
dans lequel lorsqu'un terminal utilisateur est identifié comme se situant à un endroit ou dans une zone où les entrées de données concernant la puissance reçue mesurée et la location déterminée associée sont insuffisantes, le procédé est déclenché.

2. Procédé selon la revendication1, dans lequel après avoir été transféré à nouveau dans le premier domaine de la station de base de desserte, le terminal utilisateur réalise une autre mesure de la puissance reçue dans le premier domaine,
la puissance reçue mesurée est comparée à ladite autre mesure de la puissance reçue, et
la mesure de la puissance reçue est stockée en association avec la localisation déterminée lorsqu'il est déterminé que la mesure de la puissance reçue diffère de ladite autre mesure de la puissance reçue d'une valeur inférieure à un seuil prédéterminé.

3. Procédé selon les revendications 1 ou 2, dans lequel d'autres entrées de données sont ajoutées au fil du temps.

4. Procédé selon l'une quelconque des revendications précédentes, dans lequel chaque entrée de données est rejetée comme étant périmée après une durée prédéterminée.

5. Procédé selon l'une quelconque des revendications précédentes, dans lequel ladite détermination de la localisation se fait par triangulation en prenant en compte les mesures des temps de transmission du signal entre le terminal utilisateur et au moins trois stations de base.

6. Procédé selon l'une quelconque des revendications précédentes, dans lequel le premier domaine est un domaine de technologie LTE, évolution à long terme, et le deuxième domaine est un domaine de technologie W-CDMA, accès multiple par répartition en code à large bande.

7. Procédé selon l'une quelconque des revendications 1 à 5, dans lequel le premier domaine est un domaine de technologie W-CDMA et le deuxième domaine est un domaine de technologie GSM, système mondial de communications mobiles.

8. Procédé selon l'une quelconque des revendications 1 à 5, dans lequel le premier domaine est un domaine de technologie soit LTE, soit W-CDMA, soit GSM, soit Wi-Fi et le deuxième domaine est un autre domaine de technologie soit LTE, soit W-CDMA, soit GSM, soit Wi-Fi.

9. Procédé selon l'une quelconque des revendications précédentes, dans lequel il existe un transfert supplémentaire, et une détermination de localisation, dans un troisième domaine de technologie de réseau, afin d'affiner la détermination de localisation réalisée dans le deuxième domaine.

10. Réseau comprenant des stations de base pour des télécommunications mobiles cellulaires, un terminal utilisateur dans le réseau et la station de base desservant le terminal utilisateur, tous deux pouvant être commutés entre un fonctionnement selon un premier domaine de technologie de réseau et un fonctionnement selon un deuxième domaine de technologie de réseau,
le terminal utilisateur comprenant des moyens pour effectuer une mesure de la puissance reçue dans le premier domaine,
le réseau comprenant des moyens pour déterminer la puissance du signal reçu et la localisation du terminal utilisateur comprenant :
des moyens pour recevoir une mesure de la puissance reçue mesurée par un terminal utilisateur connecté à une station de base de desserte dans un premier domaine de technologie de réseau,
des moyens pour donner des instructions au terminal utilisateur pour qu'il effectue un transfert de la connexion avec la station de base dans un deuxième domaine de technologie de réseau et pour recevoir des mesures dans le deuxième domaine de technologie des temps de transmission du signal entre le terminal utilisateur et au moins trois stations de base, destinés à être utilisés pour la détermination de la localisation du terminal utilisateur, et
des moyens pour déterminer la localisation du terminal utilisateur à partir des mesures des temps de transmission du signal, et
des moyens pour donner des instructions au terminal utilisateur pour qu'il soit transféré à nouveau dans le premier domaine de la station de base de desserte, et
**caractérisé en ce que** le réseau comprend en outre :
des moyens pour stocker la puissance reçue mesurée et la localisation déterminée associée dans une base de données sous forme d'une entrée de données pour une carte de puissance de radiofréquence, et
des moyens pour déclencher la détermination de la puissance du signal reçu et la localisation du terminal utilisateur lorsque le terminal utilisateur a été identifié comme se situant à un endroit ou dans une zone où les entrées de données pour la puissance reçue mesurée et la location déterminée associée sont insuffisantes.

11. Réseau selon la revendication 10, configuré pour réaliser une autre mesure de la puissance reçue dans le premier domaine après un nouveau transfert dans ce domaine,
le réseau étant configuré pour comparer la mesure de la puissance reçue à ladite autre mesure de la puissance reçue,
et lorsqu'il est déterminé que la mesure de la puissance reçue diffère de ladite autre mesure de la puissance reçue d'une valeur inférieure à un seuil prédéterminé, le réseau est configuré pour stocker la mesure de la puissance reçue en association avec la localisation déterminée.

12. Réseau selon les revendications 10 ou 11, dans lequel la station de base de desserte est configurée pour stocker la puissance reçue mesurée et la localisation déterminée associée dans une base de données.
